# EUROPEAN PATENT APPLICATION

(11) **EP 1 702 931 A1**
(43) Date of publication of application: **20.09.2006**
(21) Application number: 05005823.9
(22) Date of filing: 17.03.2005
(51) Int. Cl.: C08F 2/44, C08F 292/00, C08F 2/34

(54) **Process for manufacturing organoclay-polymer nanocomposites by gas phase polymerization**

(71) Applicant: Henkel Kommanditgesellschaft auf Aktien, 40589 Düsseldorf (DE)
(72) Inventor: Andou, Yoshito, Miyazaki 882-0045 (JP); Jeong, Jae-Mun Molec.Eng.Inst Kinki Univ., Fukuoka 820-8555 (JP); Hiki, Shigehiro, Kyoto 611-0033 (JP); Kaneko, Masao, Saitama 341-0021 (JP); Nishida, Haruo Prof., Fukuoka 820-0011 (JP); Endo, Takeshi Prof., Yokohama 220-0006 (JP)
(74) Representative: Leifert & Steffan

(57) **Abstract**

The invention relates to a process for producing a nanocomposite comprising a radical polymerization of at least one ethylenically unsaturated monomer species in the presence of a system comprising at least one initiator species, which is associated to the layer surfaces and interlayer spaces of at least one organoclay species, characterized in that the at least one ethylenically unsaturated monomer species is supplied to the radical polymerization in the gaseous state. The invention is further related to nanocomposites, which are obtainable by the process of the invention and the use of such nanocomposites, in particular as masterbatches.

## Description

The present invention relates to a process for manufacturing nanocomposites of layered material and organic polymers, the thus obtained nanocomposites and their use.

### Background of the invention

Polymer nanocomposites containing layered material, for instance phyllosilicates, have been attracting increasing interest over the past two decades as inorganic fillers.

Since the pioneering work published by Okada et al. in the late 1980s, e. g. US 4,739,007 (patent date April 19, 1988) and US 4,810,734 (patent date March 7, 1989), it is known that, with the addition of a small amount of a layered silicate, for instance 5 % by weight of montmorillonite to a polymer matrix, a remarkable enhancement of physical properties of the composite can be achieved. Incorporation of a few percent of such clay has been found to greatly increase a polymer's modulus, strength, gas barrier properties, and heat distortion temperature. The presence of clay is also reported to impart fire retardant properties.

The most common morphology for miscible polymer-clay dispersions is known as intercalation. In this case, the host polymer penetrates the space between the clay platelets/layers, but separating them only slightly and maintaining the parallel, regular structure of the platelets. Intercalated polymer-clay nanocomposites are often observed to have measurable improvements in physical properties, but are typically less favorable compared to the corresponding nanocomposites having a morphology known as exfoliation. Although exfoliation is much more desirable, it is less common and more difficult to obtain. In this morphology, the clay platelets are thoroughly separated from each other by the host polymer, so that their original crystallographic register is lost. Particularly for nonpolar polymer hosts, the fully exfoliated polymer-clay nanocomposites are notoriously difficult to obtain.

There is no clear dividing line between exfoliation and intercalation. However most of the researchers seem to discriminate between exfoliation and intercalation according to *d*(001)-spacing measured by X-ray diffraction (XRD). Namely, when there is no peak found in the XRD pattern, the silicate platelets are considered to be exfoliated. On the other hand, if an XRD pattern shows a peak attributable to *d*(001)-spacing of a few nanometers, the silicate platelets are considered to be intercalated. Transmission electron microscopy is often used as a secondary tool to characterize the nano-scaled structure as well.

There has been considerable effort towards developing materials and methods for intercalation and/or exfoliation of clays and other layered inorganic materials. In addition to intercalation and/or exfoliation, the clay phase should also be rendered compatible with the polymer matrix in which it should be bedded. The challenge in achieving these objectives arises from the fact that unmodified clay surfaces are hydrophilic, whereas a vast number of polymers of technological importance are hydrophobic in nature.

Montmorillonite, a kind of smectite, has been most frequently used for preparing the polymer nanocomposites. Typically, montmorillonite consists of silicate platelets that are about 1 nm thick and about 100-200 nm wide. Each platelet, or layer is typically composed of two silica tetrahedral sheets and one alumina octahedral sheet sandwiched between the silica sheets, where adjacent sheets share some of the oxygen atoms. Because of isomorphic substitution of aluminum for silicon, negative charges are generated within the layers. The (alumina-) silicate layers aggregate and form stacked structure with e.g. sodium or potassium ions between the layers to neutralize the negative charges.

Since montmorillonite is hydrophilic as described above, it does not homogeneously mingle with hydrophobic polymers. Therefore, it has to be organically modified prior to its use. The alkali metal ions within the pristine clay mineral are typically replaced with organic cations, e.g. alkylammonium cations. Then, the organically modified montmorillonite is dispersed into the polymer matrix basically by means of either melt mixing or in-situ polymerization.

Melt mixing, where a thermoplastic polymer at a temperature higher than its melting or softening point is mechanically mixed with filler, is a common industrial method of compounding and, therefore, can be advantageously employed by compounders with no or little modification of the existing compounding machines. However, despite many attempts to achieve exfoliation, so far only limited success has been achieved. For example, WO00/29467 teaches a process for producing a polymer nanocomposite by dispersing a polyvalent anionic organic edge coated quaternary ammonium intercalated multi-layered silicate material into a thermoplastic polymer, admitting some of the silicate layers are present as multiple layers, i.e. intercalates, in the product. In J. Appl. Polym. Sci., 67 (1998) pp. 87, Hasegawa and co-workers reported the use of a maleic anhydride-modified polypropylene oligomer as a compatibilizer for the production of polypropylene nanocomposites, resulting in incomplete exfoliation. In Polymer42 (2001) pp. 7465, Park and co-workers reported the use of a compatibilizer for syndiotactic polystyrene nanocomposites, where only maleic anhydride-grafted styrene-ethylene-butylene-styrene block copolymer (SEBS-MA) was found to be an effective compatibilizer for exfoliation. In this case, however, the content of the clay is limited to less than 3 % and SEBS-MA seems to have by far a greater influence on the physical properties than the clay. In EP 1 364 988 A1 it is proposed to use star-shaped polystyrene to increase the content of exfoliated layer material. Thus, completely exfoliated nanocomposites have rarely been obtained by the melt mixing process with conventional polymers.

In-situ polymerization in liquid phase has been extensively investigated as well. In an attempt to prepare a polymer nanocomposite by in-situ polymerization of ethylenically unsaturated monomers, either transition metal catalysts or free radical initiators have been used.

Transition metal compounds, e.g. group IV metallocenes, are usually immobilized on the surface of silicate platelets. The supported catalyst is dispersed into an organic medium for the (co)polymerization of olefins such as ethylene, propylene and the like. For example, Heinemann and coworkers (in: Macromol. Rapid Commun. 20 (1999) pp. 423), Dubois and coworkers (in: Macromol. Symp. 194 (2003) 13), and Jin and coworkers (in: Macromol. Rapid Commun. 23, (2002) pp. 135) stated that montmorillonite was completely exfoliated by in-situ polymerization of olefins, judging from mainly XRD patterns with no basal peak attributable to a layered structure. It should be noted that the catalytic activity of the supported catalysts are much lower than those of ordinary, unsupported catalysts. For example, catalytic activity of methylaluminoxane/*rac*-dimethylsilylene-bis(2-methylbenz[*e*]indenyl)zirconium chloride supported on dimethylstearylbenzylammonium-modified Na-bentonite for ethylene/1-octene copolymerization is 1,500 kg/(mol·M·h), compared with 253,800 kg/(mol·M·h) of ordinary, unsupported catalyst system, calculated from mass of polymer, catalyst concentration, monomer concentration, and polymerization time (Macromol. Rapid Commun. 20 (1999), page 426, Table 2). The catalytic activities of ordinary catalyst systems are so high there is no need to remove the residual catalyst. In the case of nanocomposites thus obtained, however, a substantial amount of catalyst remains in the product and the residual metal compound may have adverse effects on the product such as yellowing.

As for radical polymerization of vinyl monomers, e.g. methyl methacrylate, a large number of experiments have been carried out in liquid phase: emulsion, solution, and bulk polymerization. Some of them have succeeded in obtaining exfoliated nanocomposites. The successful results seem to be based on the use of special quaternary alkylammonium cations for the modification of layered silicates: either "initiator type" or "monomer type" quaternary alkylammonium salts. The "initiator type" modifier has both a moiety to generate free radicals upon exposure to heat or UV radiation for radical polymerization and a quaternary ammonium moiety for cation exchange in the same molecule. Some examples of the moiety for free radical generation are azo (Fan et al. in: Langmuir 19 (2003) pp. 4381), nitroxy (Weimer et al. in: J. Amer. Chem. Soc. 121 (1999) pp. 1615), and bromoalkyl (Zhao et al. in: J. Polym. Sci. Part A: Polym. Chem. 42 (2004) 916. The other one, "monomer type" modifier has a polymerizable moiety like methacryloyloxy or vinylbenzyl as well as a quaternary ammonium moiety. Thus, silicate platelets and matrix polymer chains are firmly bound through ionic and covalent bonds, which helps to homogeneously disperse the silicate platelets into polymer matrix.

Nevertheless disadvantages exist in the prior art of the in-situ polymerization in liquid-phase from industrial point of view. Preparation of such modified quaternary alkylammonium salts requires an extra cost because they have to be custom-manufactured. In addition, in the case of liquid-phase polymerization in the presence of "monomer type" quaternary alkylammonium-modified silicates, most of the radical initiator molecules in the reaction system are not closely bound to the silicate surfaces and therefore most of polymerization takes place away from silicate. As a result, the great majority of the polymer formed in the reaction system does not contribute to the exfoliation, resulting in poor efficiency. In turn the silicate content of the polymerization product becomes too low to be used as a masterbatch.

In the prior art of the in-situ radical polymerization of vinyl monomers for the production of polymer nanocomposite, it is unavoidable to use costly quaternary ammonium salts that have either an initiation site for the generation of free radicals or a polymerizable double bond to be incorporated into matrix polymer chains, for the modification of layered clay minerals.

Thus, more economical and efficient methods are highly required to produce exfoliated polymer nanocomposites with an increased filler content.

Therefore one aim of the present invention is to eliminate the use of the costly, custom-made quaternary ammonium salts, and to make it possible to use standard commercially available organically modified clay minerals.

Yet another aim of the present invention is to provide nanocomposites with a high content of inorganic phase. Conventional in-situ polymerization of vinyl monomers in liquid phase can achieve a clay content of about 10 % at most. From industrial point of view, this is problematic because no compounders can use the product as a masterbatch. Masterbatch products could for instance be used for further melt mixing. In other words, molders and/or compounders would be able to optimize the clay content in their products by adjusting the mixing ratio of the masterbatch to pristine polymers.

Therefore there is a need for nanocomposites comprising a content of clay mineral, for instance as high as 30 to 40 % by weight or even higher, for use as a masterbatch.

Further drawbacks, for example degradation or yellowing of the product caused and accelerated by residual catalyst, should be avoided.

It is the aim of the present invention to provide a process to obtain nanocomposites, which overcomes one or more of the above drawbacks of the state of the art.

Therefore the present invention provides a process for producing a nanocomposite comprising a radical polymerization of at least one ethylenically unsaturated monomer species in the presence of a system comprising at least one initiator species, which is associated to the layer surfaces and interlayer spaces of at least one organoclay species, characterized in that the at least one ethylenically unsaturated monomer species is supplied to the radical polymerization in the gaseous state.

Whenever used in the specification the terms set forth shall herein have the following meaning:
"Nanocomposite" shall mean a composite material wherein at least one component comprises an inorganic phase, such as a smectite clay, with at least one dimension in the 0.1 to 100 nanometer range.
"Layered material" shall mean an inorganic material such as a smectite clay that is in the form of a plurality of adjacent bound layers.
"Platelets" shall mean individual layers of the layered material.
"Intercalation" shall mean the insertion of one or more foreign molecules or parts of foreign molecules between platelets of the layered material, usually detected by X-ray diffraction technique, as illustrated in US 5 891 611 (line 10, col.5 - line 23, col. 7).
"Intercalant" shall mean the aforesaid foreign molecule inserted between platelets of the aforesaid layered material.
"Exfoliation" or "delamination" shall mean separation of individual platelets in to a disordered structure without any stacking order. By the term "substantially completely exfoliated" is meant that at least 90 percent of the original background-subtracted X-ray diffraction peak intensity (height) due to the (001) basal plane has been lost, as shown by a standard measurement in conformity with the type of measurements provided in Examples below. The term "(001) basal plane" shall refer to the spacing between a layer of silicate atoms in one plane to the corresponding layer of silicate atoms in another plane, including any material present between layers. This can also be referred to as basal plane spacing or d(001).
"Intercalated" shall refer to layered material that has at least partially undergone intercalation. This can also include material that has undergone both partial intercalation and partial exfoliation.
"Organoclay" shall mean clay material modified by organic molecules.
"Swellable" shall refer to a layered material capable of showing an increase or expansion in spacing between layers resulting from insertion of species into the said layered material, in particular resulting from intercalation of organic molecules, for instance resulting in the formation of an organoclay.

In a preferred embodiment of the invention the layers of the organoclay are substantially completely exfoliated, which results in a random dispersion into the polymer matrix.

### Clays:

The clay material suitable to prepare an organoclay can comprise any inorganic phase comprising layered materials in plates or other shapes with a significantly high aspect ratio. The clay materials suitable for this invention include phyllosilicates, e.g., montmorillonite, particularly sodium montmorillonite, potassium motmorrilonite, magnesium montmorillonite, and/or calcium montmorillonite, nontronite, beidellite, volkonskoite, hectorite, saponite, sauconite, sobockite, stevensite, svinfordite, vermiculite, magadiite, kenyaite, talc, mica, kaolinite, and mixtures thereof. Other useful layered materials include illite, mixed layered illite/smectite minerals, such as ledikite and admixtures of illites with the clay minerals named above.

Preferred clays are swellable. These swellable clays include phyllosilicates of the 2:1 type, as defined in clay literature (for example: H. van Olphen in: An Introduction to Clay Colloid Chemistry, John Wiley & Sons Publishers, 1977). Typical phyllosilicates possess an ion exchange capacity of 50 to 300 milliequivalents per 100 grams, more preferably 50 to 200 milliequivalent per 100 grams. Preferred clays for the present invention include smectite clay such as montmorillonite, nontronite, beidellite, volkonskoite, hectorite, saponite, sauconite, sobockite, stevensite, svinfordite, halloysite, magadiite, kenyaite and vermiculite as well as layered double hydroxides or hydrotalcites. The most preferred clays include montmorillonite, hectorite and hydrotalcites, because of their effectiveness in the present invention and/or the commercial availability of these materials. Particularly preferable is a montmorrilonie having a cation exchange capacity of 50 to 200 milliequivalents per 100 grams.

The aforementioned clays can be natural or synthetic, for example synthetic smectite clay. This distinction can influence the particle size and/or the level of associated impurities. Typically, synthetic clays are relatively smaller than natural clays in lateral dimension, and therefore possess smaller aspect ratios. However, synthetic clays are purer and are of narrower size distribution, compared to natural clays, and may not require any further purification or separation. For this invention, the clay particles typically have (on average) a lateral dimension of between 0.01 µm and 5 µm, and preferably between 0.05 µm and 2 µm, and more preferably between 0.1 µm and 1 µm. The thickness or the vertical dimension of the clay particles typically varies (on average) between 0.5 nm and 10 nm, and preferably between 1 nm and 5 nm. The aspect ratio, which is the ratio of the largest and smallest dimension of the clay particles is preferrably >10:1, and more preferably >100:1 for use in compositions of this invention. The aforementioned values regarding the size and shape of the particles are designed to ensure best improvements in some properties of the nanocomposites without deleteriously affecting others. For example, a large lateral dimension may result in an increase in the aspect ratio, a desirable criterion for improvement in mechanical and barrier properties. However, very large particles can cause optical defects, such as haze, and can be abrasive to processing, conveyance and finishing equipment as well as the imaging layers. However none of the aforementioned values, ranges or ratios is a limiting criterion for the present invention.

### Organoclays:

The aforementioned layered materials are basically hydrophilic and need to be organically modified/treated to become compatible with organic polymers. The thus modified or treated clays can be described by the term organoclays.

Organoclays can be produced by interacting the unfunctionalized clay with suitable intercalants. These intercalants, which are also referred to as "swelling agents" are typically organic cationic compounds. Useful compounds are cationic surfactants including onium species such as ammonium (primary, secondary, tertiary, and quaternary), phosphonium, or sulfonium derivatives of aliphatic, aromatic or arylaliphatic amines, phosphines and sulfides. Typically onium ions can cause intercalation in the layers through ion exchange with the metal cations of the preferred smectite clay. A number of commercial organoclays, which may be used in the practice of this invention, are available from clay vendors. For example, the organoclay Cloisite 20A, which is a dimethyl dihydrogenated tallow ammonium-modified montmorillonite supplied by Southern Clay Products, Inc. can be conveniently used for the purpose of the present invention.

The intercalation of the onium species can for instance be accomplished according to well-established methods. For example, an excess of an aqueous quaternary alkyl ammonium salt containing solution can be added gradually to an aqueous dispersion of the smectite clay under vigorous stirring, yielding precipitates. The precipitates can be separated and washed with water to remove the unreacted quaternary alkylammonium salt, and dried in *vacuo*. Most preferably the onium salt is a quaternary ammonium salt with one or more organic group(s) which render the clay compatible with organic materials, for instance radical initiators, ethylenically unsaturated monomers, and polymers resulting from the polymerization of ethylenically unsaturated monomers. Quaternary alkyl amines containing at least one alkyl group with a carbon number of 8 and more are preferably used. Examples for alkyl ammonium salts are for instance trimethyl(octyl) ammonium chloride, trimethyl(decyl) ammonium chloride, trimethyl(dodecyl) ammonium chloride, trimethyl(tetradecyl) ammonium chloride, trimethyl(hexadecyl) ammonium chloride and trimethyl(stearyl) ammonium chloride.

Although the use of "monomer type" or "initiator type" quaternary alkylammonium ions for the modification of phyllosilicates as mentioned above is not necessary, the present invention does not exclude such modifiers.

### Initiators:

For further use in the polymerization reaction the organoclay has to be "doped" or "impregnated" with one or more radical initiators. In the context of the present invention, "doping" or "impregnating" means bringing the initiator in contact with the layered material, i.e. the organoclay, so that the initiator molecules are associated to the layers of the organoclay. An association to the layers can be accomplished in different ways. One possibility is, that the initiator molecules are only loosely bound to the layer surfaces, e.g. by dipolar forces or by van der Waals forces. It is, however, also possible to use initiators which are bound to the surface of the substrate by ionic bonds or covalent bonds. Such association of the free radical initiator to the organoclay can be effected prior to and/or during the polymerization.

Generally, all systems which are able to initiate a radical polymerization of vinyl moieties containing monomers can be used as initiators according to the present invention. In a preferred embodiment of the present invention, monomers can be used yielding radicals on suitable activation like hydroperoxides, especially cumene hydroperoxide or tert.-butyl hydroperoxide, organic peroxides like dibenzoyl peroxide, dilauric peroxide, dicumene peroxide, di-tert.-butyl peroxide, methyl ethyl ketone peroxide, tert.-butyl benzoyl peroxide, diisopropyl peroxy dicarbonate, dicyclohexyl peroxy dicarbonate, di-tert.-butyl peroxalate, inorganic peroxides like potassium persulfate, potassium peroxydisulfate or hydrogen peroxide, azo compounds like azo bis(isobutyro nitrile), 1,1'-azo bis(1-cyclohexane nitrile), 2,2'-azo bis(2-methyl butyronitrile), 2,2'-azo bis(2,4-dimethyl valeronitrile), 1,1'-azo bis(1-cyclohexane carbonitrile), dimethyl-2,2'-azobisisobutyrate, 4,4'-azo bis(4-cyano valeric acid) or triphenyl methyl azobenzene, redox systems like mixtures of peroxides and amines, mixtures of peroxides and reducing agents, optionally in the presence of metal salts and or chelating agents. Generally speaking, all initiating systems known to the skilled person from conventional radical polymerizations, like bulk polymerization or emulsion polymerization, can be employed in the method according to the present invention.

Also suitable as initiators according to the present invention are combinations of dialkylanilines and halogen compounds, boron alkyls and oxidizing agents, organometallic compounds and oxidizing agents and metal acetylacetonates.

A polymerization according to the present invention can also be initiated by photochemical initiators or initiating systems with radioactive sources or electron beams, iniferters like dithiocarbamate compounds, monosulfides, cyclic and acyclic disulfides, nitroxides including stable, free radical species and their adducts or oxidation adducts of borabicyclononane compounds.

As an initiation procedure, generally all procedures which initiate a propagating species are acceptable in the present context. In a suitable initiation procedure the initiator or the mixture of two or more initiators are subjected to an energy source which causes the generation of a species able to initiate a propagation step which causes the polymerization. Suitable types of energy comprise thermal energy, radiation like laser-light, UV-light or gamma rays or high energy particles, e.g., from radioactive sources.

According to the process of the present invention, the above-mentioned initiators can be used alone or as combinations of two or more of the above-mentioned initiators. In a preferred embodiment of the process according to the present invention, initiators are preferred which, upon heating or irradiation with a source of high energy radiation, decompose to form an initiating species, e.g., two radicals. It is, according to the present invention, most preferred to use as initiators an initiator from the group consisting of peroxides or azo compounds. In a most preferred embodiment of the present invention the initiator or the combination of initiators employed in the process according to the present invention is selected from the group consisting of a cumene hydroperoxide, tert.-butyl hydroperoxide, dibenzoyl peroxide, dilauric peroxide, dicumene peroxide, di-tert.-butyl peroxide, methyl ethyl ketone peroxide, tert.-butyl benzoyl peroxide, diisopropyl peroxydicarbonate, dicyclohexyl peroxydicarbonate, ditert.-butyl peroxalate, potassium persulfate, potassium peroxydisulfate, hydrogen peroxide, azo bis(isobutyro nitrile), 1,1'-azo bis(1-cyclohexane carbonitrile) 4,4'-azo bis(4-cyano valeric acid) or triphenyl methyl azobenzene.

The concentration of the initiators on layer surface is generally in a range of from about 0,01 to about 50 µmol/cm², preferably from about 0,05 to about 10 µmol/cm² or from about 0,1 to about 5 µmol/cm², and/or 0.005 to about 1 gram per gram of organoclay, preferably from about 0.01 to about 0.5 gram per gram of organoclay, more preferably from about 0.05 to about 0.25 gram per gram of organoclay.

If an initiator is to be used, which is firmly bound to the platelet surfaces of the organoclay by ionic or by covalent bonds, the above-mentioned types of initiators must be equipped with a functional group that allows for the above-mentioned type of bonding to the substrate surface.

The modification of a substrate surface with a functional initiator molecule is generally achieved by using initiator molecules that have at least one anchor group which is able to react with functional groups on the clay platelet surfaces. In general, all types of reactions can be used to achieve an ionic or a covalent bond between the surfaces and an initiator molecule. If the type of bond is ionic, usually suspending the substrate in a solution of the respective initiator molecule is sufficient to achieve a substrate with a modified surface that can be used according to the present invention.

If the bonding between the substrate and the initiator is to be covalent, only reactions that lead to a covalent bond between the substrate surface and the initiator molecule can be employed.

The contact between initiator and organoclay can generally be established by all contacting methods known to the skilled person which lead to the desired type of bonding between the initiator and the substrate surface.

In a preferred method according to the present invention, the initiators are contacted with the organoclay preferably by way of contacting the substrate and the initiator compounds or a mixture of two or more initiator compounds, dissolved in a liquid phase.

The impregnation of the organoclay is preferably achieved by contacting a solvent or solvent mixture containing the initiator or the initiators with the organoclay, where the organoclay is inert against the initiator and/or the initiator components and where the solvent or the solvent mixture can be removed, preferably completely removed, from the impregnated organoclay. Preferably the amount of solvent or solvent mixture remaining on the substrate is low, e.g. less than 0.1 or less than 0.01 % by weight, relative to the weight of the initiator or the mixture of two or more initiators.

If an organoclay powder is used, the impregnation of the organoclay can also be achieved by contacting the organoclay and the initiator or the initiators in a fluidized bed. The organoclay is fluidized by a flow of inert gas and the solution containing the initiator or the initiators is brought into contact with the substrate e.g. by spraying. By an internal circulation the inert gas can be, after it was stripped from solvents and initiators, circulated back to the reactor. This process can be run batchwise or continuously.

Following the impregnation of the organoclay with the initiator or the initiators, the solvent or the solvent mixture is removed as completely as possible, for instance by distillation. The distillation is carried out, depending on the boiling temperature of the solvent or the solvent mixture and the pressure during the distillation, at a temperature of about 10 to about 150 °C, preferably at 10 to 70 °C, and at pressures of 0.001 up to about 20 bar, preferably at about 0.001 mbar up to about ambient pressure. The distillation temperature, however, has to be lower than the activation temperature of the initiator, if the initiator is thermally activable.

The initiator bearing organoclay is preferably kept at or below a temperature where premature decomposition of the initiator can be avoided.

### Ethylenically unsaturated monomers:

The ethylenically unsaturated monomers used according to the present invention can be any ethylenically unsaturated compounds that are capable of being polymerized by free radical initiators.

The preferred monomers include those of the formula (I) 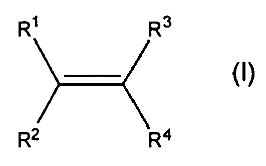 wherein R¹ and R² are independently selected from the group consisting of H, halogen, CF₃ straight or branched alkyl of 1 to 20 carbon atoms (preferably from 1 to 6 carbon atoms, more preferably from 1 to 4 carbon atoms), aryl, α,β-unsaturated straight or branched alkenyl or alkynyl of 2 to 10 carbon atoms (preferably from 2 to 6 carbon atoms, more preferably from 2 to 4 carbon atoms), α,β-unsaturated straight or branched alkenyl of 2 to 6 carbon atoms (preferably vinyl) substituted (preferably at the α-position) with a halogen (preferably chlorine), C₃-C₈ cycloalkyl, heterocycloalkyl, YR⁵, C(=Y)R⁵, C(=Y)YR⁵, C(=Y)NR⁶R⁷ and YC(=Y)R⁶, where Y may be S, NR⁶ or O (preferably O), R⁵ and R⁶ is alkyl of from 1 to 20 carbon atoms, alkoxy of from 1 to 20 carbon atoms, aryloxy or heterocycloxy, R⁶ and R⁷ are independently H or alkyl of from 1 to 20 carbon atoms, or R⁶ and R⁷ may be joined together to form an alkylene group of from 2 to 5 carbon atoms, thus forming a 3- to 6-membered ring, and R⁶ is H, straight or branched C₁-C₂₀ alkyl and aryl, R³ is selected from the group consisting of H, halogen (preferably fluorine or chlorine), C₁₋C₆ (preferably Cl) alkyl, COOR⁸ (where R⁸ is H, an alkali metal, or a C₁-C₂₀ alkyl group in which each hydrogen atom may be replaced with halogen, preferably fluorine or chlorine, or CₙH₂ₙYₘSiR^{x}₃, in which n is from 1 to 8, m is 1 or 0, Y may be S or O and R^{x} is selected from the group consisting of H, Cl, C₁-C₂-alkyl and alkoxy of from 1 to 4 carbon atoms) or aryl; or R¹ and R³ may be joined to form a group of the formula (CH₂)ₙ (which may be substituted with from 1 to 2n' halogen atoms or C₁₋C₄ alkyl groups) or C(=O)-Y-C(=0), where n' is from 2 to 6 (preferably 3 or 4) and Y is as defined above; or R⁴ is the same as R¹ or R² or optionally R⁴ is a CN group.

In the context of the present application, the terms "alkyl", "alkenyl" and "alkynyl" refer to straight-chain or branched groups.

Furthermore, in the present application, "aryl" refers to phenyl, naphthyl, phenanthryl, phenylenyl, anthracenyl, triphenylenyl, fluoroanthenyl, pyrenyl, chrysenyl, naphthacenyl, hexaphenyl, picenyl and perylenyl (preferably phenyl and naphthyl), in which each hydrogen atom may be replaced with alkyl of from 1 to 20 carbon atoms (preferably from 1 to 6 carbon atoms and more preferably methyl), alkyl of from 1 to 20 carbon atoms (preferably from 1 to 6 carbon atoms and more preferably methyl) in which each of the hydrogen atoms can be independently replaced by a halide (for example by a fluoride or a chloride), alkenyl of from 2 to 20 carbon atoms, alkynyl of from 1 to 20 carbon atoms, alkoxy of from 1 to 6 carbon atoms, alkylthio of from 1 to 6 carbon atoms, C₃-C₈ cycloalkyl, phenyl, halogen, NH₂, C₁-C₆ alkylamino, C₁-C₆ dialkylamino, and phenyl, which may be substituted with from 1 to 5- halogen atoms and/or C₁-C₆ alkyl groups. (This definition of "aryl" also applies to the aryl groups in "aryloxy" and "aralkyl"). Thus, phenyl may be substituted from 1 to 5 times and naphthyl may be substituted from 1 to 7 times (preferably, any aryl group, if substituted, is substituted from 1 to 3 times) with one of the above substituents.

More preferably, "aryl" refers to phenyl, naphthyl, phenyl substituted from 1 to 5 times with fluorine or chlorine, and phenyl substituted from 1 to 3 times with a substituent selected from the group consisting of alkyl of from 1 to 6 carbon atoms, alkoxy of from 1 to 4 carbon atoms and phenyl. Most preferably, "aryl" refers to phenyl and tolyl.

In the context of the present invention, "heterocyclyl" refers to pyridyl, furyl, pyrrolyl, thienyl, imidazolyl, pyrazolyl, pyrazonyl, pyrimidinyl, pyridazinyl, pyranyl, indolyl, isoindolyl, indazoiyl, benzofuryl, isobenzofuryl, benzothienyl, isobenzothienyl, chromenyl, xanthenyl, purinyl, piperidinyl, quinolyl, isoquinolyl, phthalazinyl, quinazolinyl, quinoxalinyl, naphthyridinyl, phenoxathiinyl, carbazolyl, cinnolinyl, phenanthridinyl, acridinyl, 1,10-phenanthrolinyl, phenazinyl, phenoxazinyl, phenothiazinyl, oxazolyl, thiazolyl, isoxazolyl, isothiazolyl, and hydrogenated forms thereof known to those in the art.

Preferred heterocyclyl groups include pyridyl, furyl, pyrrolyl, thienyl, imidazolyl, pyrazolyl, pyrazinyl, pyrimidinyl, pyridazinyl, pyranyl and indolyl, the most preferred heterocyclyl group being pyridyl. Accordingly, suitable vinyl heterocyclyls to be used as a monomer in the present invention include 2-vinyl pyridine, 4-vinyl pyridine, 2-vinyl pyrrole, 2-vinyl pyrrole, 2-vinyl oxazole, 4-vinyl oxazole, 9-vinyl oxazole, 2-vinyl thiazole, 4-vinyl-thiazole, 5-vinyl-thiazole, 2-vinyl imidazole, 4-vinyl imidazole, 3-vinyl pyrazole, 4-vinyl pyrazole, 3-vinyl pyridazine, 4-vinyl pyridazine, 3-vinyl isoxazole, 3-vinyl isothiazoles, 2-vinyl pyrimidine, 4-vinyl pyrimidine, 5-vinyl pyrimidine, and any vinyl pyrazine.

The vinyl heterocycles mentioned above may bear one or more (preferably 1 or 2) C₁-C₆ alkyl or alkoxy groups, cyano groups, ester groups or halogen atoms, either on the vinyl group or the heterocyclyl group. Further, those vinyl heterocycles which, when unsubstituted, contain an N-H group may be protected at that position with a conventional blocking or protecting group, such as a C₁-C₆ alkyl group, a tris-C₁-C₆ alkylsilyl group, an acyl group of the formula R⁹CO (where R⁹ is alkyl of from 1 to 20 carbon atoms, in which each of the hydrogen atoms may be independently replaced by halide, preferably fluoride or chloride), alkenyl of from 2 to 20 carbon atoms (preferably vinyl), alkenyl of from 2 to 10 carbon atoms (preferably acetylenyl), phenyl which may be substituted with from 1 to 5 halogen atoms or alkyl groups of from 1 to 4 carbon atoms, or aralkyl (aryl-substituted alkyl, in which the aryl group is phenyl or substituted phenyl and the alkyl group is from 1 to 6 carbon atoms), etc. (This definition of "heterocyclyl" also applies to the heterocyclyl groups in "heterocyclyloxy" and "heterocyclic ring.")

More specifically, preferred monomers include (but not limited to) styrene, vinyl acetate, acrylate and methacrylate esters of C₁-C₂₀ alcohols, acrylic acid, methacrylic acid, t-butyl acrylate, hydroxyethyl-methylacrylate, isobutene, acrylonitrile, and methacrylonitrile.

Most preferred monomers are acrylic and methacrylic acid esters having from 1 to about 20 carbon atoms in the alcohol moiety, styrene, vinyl substituted styrene, such as α-alkyl styrene or ring substituted styrene such as p-alkyl styrene; such monomers are commercially available or can be easily prepared by known esterification processes. Preferred esters are n-butyl acrylate, ethyl acrylate, methyl methacrylate, isobornyl methacrylate, 2-ethylhexyl acrylate, t-butylacrylate, hydroxyethylmethylacrylate, acrylate and methacrylate esters of C₁-C₂₀ fluorinated alcohols; preferred styrenic monomers are styrene, α-methyl styrene, p-methyl styrene, p-tert-butyl styrene, p-acetoxy styrene and ring-halogenated styrene.

### Polymerization process

In a reactor, the organoclay associated with the radical initiator is brought into contact with one or more ethylenically unsaturated monomers present in the gas phase.

In the context of the present invention the term "in the gas phase" means that the monomer or the mixture of two or more monomers contact the initiator or a propagating species by direct access from the gas phase without interaction in a liquid phase.

This does, however, not mean that the gas phase in the process according to the present invention must be completely free from "liquids". It is also within the scope of the present invention that the gas phase contains microdroplets of monomers which can be spread in the gas phase by a carrier gas, depending on the method of introduction of the monomer or the monomer mixture into the gas phase. It is, however, preferred that the gas phase in the process according to the present invention is essentially free of such microdroplets, preferably free of microdroplets.

Generally speaking, the process according to the present invention will not require a solvent or a liquid monomer phase for the polymerization according to the present invention. It is, however, not excluded that the gas phase contains molecules that do not take part in the polymerization process, such as solvent molecules. It is also not excluded that the gas phase contains molecules other than the polymerizable monomers, such as a carrier gas or a mixture of two or more carrier gases.

Carrier gases are substances which are in a gaseous state at the operating temperature of the present invention. Preferably compounds are used as carrier gases which are in a gaseous state at the reaction temperature and pressure, preferably at a temperature of 80 °C or less, more preferably at a temperature of 50 or 30 °C or less. Suitable carrier gases are essentially inert towards the monomers, the initiators and the organoclay under the reaction conditions and thus do not take part in the polymerization itself. Gases like He, Ne, Ar, N₂, CO₂, H₂O and the like.

The polymerization itself takes place in a reactor which can generally have any shape or size as long as it is able to host the initiator impregnated organoclay. Suitable reactors can be tightly sealed against the surrounding atmosphere.

According to the process of the present invention, the ethylenically unsaturated monomer is introduced into a reactor in the gaseous state. This can generally be done by all methods known to the skilled person like vaporizing under reduced pressure, vaporizing by heating, bubbling with carrier gas flow or sublimating by heating under reduced pressure.

The ethylenically unsaturated monomers can be introduced into the reactor before during or after the activation of the initiator. In a preferred embodiment of the present invention, the monomers are introduced before or during the activation of the initiator.

During the polymerization according to the present invention, the one or more ethylenically unsaturated monomers are consumed from the gas phase and polymer is formed on the surface of and between the layers of the organoclay material resulting in a substantially complete exfoliation of the organoclay.

The reaction time according to the present invention depends upon the desired molecular weight of the polymer and the speed of the reaction. The reaction speed can be varied in conventional ways known to the skilled person, e.g. by variation of the monomer type, monomer concentration, reaction temperature, flow rate of the carrier gas, the surface area of the organoclay doped or impregnated with the initiator or accelerators such as light.

The reaction can generally be performed at a temperature of from about -80 to about 200 °C, depending on the type of initiator, the type of activation and the monomer types. In a preferred embodiment of the present invention, the reaction temperature is from about 0 °C to about 150 °C or from about 20 to about 100 °C or from about 40 to about 70 °C, especially from about 45 to about 65 °C.

The reaction time can essentially last for any time specified by the operator, as long as the chain ends of the polymers are still "alive" and the polymerization can still propagate. Generally, the reaction time per step, for instance for a chosen type of monomer or for a chosen monomer composition, the reaction time can vary in broad ranges, for example between about 10 minutes to about 5 days, depending on the type of monomers, the desired molecular weight, the initiator, the organoclay and the desired organoclay concentration in the nanocomposite. In a preferred embodiment of the present invention, the reaction time for one polymerization step is in the order of from about 1 to about 50 h, preferably from about 2 to about 40 h.

\ As reported in EP 1 336 622 A1, it is also possible to carry out the polymerization reaction in a step-wise manner. This can be done by lowering the concentration of the initially supplied at least one ethylenically unsaturated monomer and by subsequently introducing at least one ethylenically unsaturated monomer, which is different from the first one(s) to proceed with the polymerization. The steps of lowering the concentration of one monomer (mixture) and introducing another monomer (mixture) can be repeated as often as desired.

Since organoclays used for the present invention are usually in the form of powder, the organoclays can efficiently contact the monomer in a reactor equipped with mechanical stirrers or in a fluidized bed reactor. Suitable reactors can be tightly sealed against the surrounding atmosphere. Since the impregnation of organoclay powders with the initiators can also be carried out in a fluidized bed reactor, one and the same reactor can be used to impregnate the organoclay and host the polymerization reaction.

During the polymerization according to the present invention regulators can be present. Regulators are substances which can influence the polymerization reaction and the structure of the polymer obtained. Suitable regulators are described, for instance, in Ullmanns Enzyklopadie der technischen Chemie, vol. 15, pages 188 and ff. Suitable regulators are, e.g., aromatic hydrocarbons like triphenylmethane, nitro-or nitrosoaromatics like nitrobenzene, nitrotoluene or nitrosobenzene, organic halogen compounds like tetrachloromethane, tetrabromomethane or bromotrichloromethane, organic sulphur compounds like alkylmercaptanes and xanthogenedisulfides, e.g., n-dodecylmercaptane, tert.-dodecylmercaptane, butylmercaptane, tert.-butylmercaptane, dibutyldisulfide, diphenyldisulfide, benzyldiethyldithiocarbamate or 2-phenylethyldiethyl-dithiocarbamate, or compounds bearing carbonyl functions like ketones and aldehydes, especially acetoaldehyde, propioaldehyde and acetone. It is, however, preferred to conduct the process according to the present invention without the use of regulators.

The invention also provides nanocomposites, which are obtainable according to the method of the present invention.

In a preferred embodiment of the present invention such nanocomposites comprise at least 10 % by weight, more preferably at least 15 or 20 % by weight of the essentially completely exfoliated organoclay material, based on the total weight of the nanocomposite. Even more preferable the nanocomposites comprise at least 25 % by weight and most preferable at least 30 % by weight of the essentially completely exfoliated organoclay material, based on the total weight of the nanocomposite. However, it is also possible to prepare conventional nanocomposite by means of the gas phase polymerization method of the present invention containing 10 % or less of exfoliated organoclay material.

The invention also relates to the use of the nanocomposites of the invention or obtained according to the process of the invention as reinforced material and/or masterbatch, which e.g. can be used to supplement a pristine polymer for instance in a melt-blending process by means of extruders.

The invention is explained in more detail by the following examples. The examples have an illustrating function and are not meant to limit the scope of the invention.

### EXAMPLES

*Materials:* Inorganic montmorillonite clay that is characterized by a cation exchange capacity of 108.6 meq/100g was supplied by Kunimine Co. and used as received for the subsequent modification. Stearyltrimethylammonium chloride (Nacalai Tesque, Inc.) was used as received. Vinyl monomers, methyl methacrylate (MMA) and styrene (St), and radical initiator, 2,2'-azobis(isobutyronitrile) (AIBN) were purchased from Wako Pure Chemical Industries, and were purified by fractional distillation over calcium hydride and recrystallization from methanol, respectively.

*Measurement:* XRD analysis was performed on a Rigaku diffractometer equipped with a Cu Kα generator (λ=0.1541 nm) under the following conditions: slit width, 0.30 mm; generator current, 16 mA; voltage, 30 kV; and scanning rate, 2 °C/min. Number and weight-average molecular weights (Mn and Mw) were measured on a Tosoh HPLC-8220 gel permeation chromatography system equipped with a polystyrene gel column (TSK gel super HM-H: 6.0 mm I.D.×150 mm, linearity range, 10³ - 8×10⁶; molecular weight exclusion limit, 4×10⁸) and detectors, i.e. refractive index and ultra violet (UV, 254 nm).

### Example 1

Montmorillonite clay (2.5 g) was dispersed into 3 L of deionized water, and the dispersion was stirred vigorously overnight at room temperature. The suspension was then ultrasonicated for 5 hours, resulting in a homogeneous dispersion. Stearyltrimethylammonium chloride was dissolved in deionized water to make a 10 % aqueous solution. An excess amount of the ammonium salt solution (14 g, about 50 % excess) to fully replace the Na counterions in the montmorillonite was slowly added to the montmorillonite dispersion while it was being stirred. The mixture was then stirred for another 12 hours. The resulting white precipitate was separated by filtration, washed with deionized water to remove the unattached ammonium salt, and dried in vacuo at 45 °C for 24 hours. The d(001)-spacing of the organically modified montmorillonite was 2.08 nm according to XRD analysis and Bragg equation.

The organically modified montmorillonite particles (60 mg) and AIBN (2.0 mg) were dissolved in 200 µL of acetone and mixed by stirring in a glass vial. Then, acetone was slowly and completely eliminated under a reduced pressure.

The glass vial containing the clay was placed in a glass reactor for subsequent gas-phase polymerization. Liquid MMA monomer (about 4 mL) and 4-*tert-*butylpyrocatechol (about 25 mg) as an inhibitor were introduced into a separated area in the reactor under argon gas flow. The reactor was degassed by three times of freeze-pump-thaw cycle and then sealed off in vacuo. The reactor was maintained at 70 °C for 1 hour. After the prescribed time of polymerization, the product was taken out and adsorbed/absorbed MMA monomer was completely desorbed in vacuo at 45 °C. The final weight of the product was 315 mg, containing about 19 % of the modified montmorillonite. Mn and Mw were 276,000 and 1,880,000, respectively. XRD analysis of the product showed no peak, meaning complete exfoliation of the silicate platelets.

### Example 2

A composite material comprising polyMMA and montmorillonite was prepared in the same manner as in Example 1, except that decyltrimethylammonium chloride was used for the modification of montmorillonite and the amount of AIBN was 4.0 mg. The modified montmorillonite had d(001)-spacing of 1.59 nm before polymerization. The final weight of the product after gas-phase polymerization was 216 mg, containing about 28 % of the modified montmorillonite. Mn and Mw were 41,000 and 283,000, respectively. XRD analysis of the product showed no peak, meaning complete exfoliation of the silicate platelets.

### Example 3

A composite material was prepared in the same manner as in Example 2, except that styrene was used for the polymerization. The final weight of the product after gas-phase polymerization was 322 mg, containing about 19 % of the modified montmorillonite. Mn and Mw were 222,000 and 997,000, respectively. XRD analysis of the product showed no peak, meaning complete exfoliation of the silicate platelets.

## Claims

1. A process for producing a nanocomposite comprising a radical polymerization of at least one ethylenically unsaturated monomer species in the presence of a system comprising at least one initiator species, which is associated to the layer surfaces and interlayer spaces of at least one organoclay species, **characterized in that** the at least one ethylenically unsaturated monomer species is supplied to the radical polymerization in the gaseous state.

2. The process according to claim 1, wherein the organoclay is obtained by impregnation or doping of a swellable phyllosilicate having an ion exchange capacity of 50 to 300 milliequivalents per 100 gram and at least one dimension in the range of 0.1 to 100 nm, with an intercalant.

3. The process according to claim 2, wherein the swellable phyllosilicate is selected from a smectite clay selected from montmorillonite, nontronite, beidellite, volkonskoite, hectorite, saponite, sauconite, sobockite, stevensite, svinfordite, halloysite, magadiite, kenyaite and vermiculite.

4. The process according to claim 3, wherein the smectite clay is motmorrilonite.

5. The process according to any of claims 2 to 4, wherein the intercalant is selected from primary, secondary, tertiary, and quaternary ammonium; phosphonium; or sulfonium derivatives of aliphatic, aromatic or arylaliphatic amines, phosphines and sulfides.

6. The process according to claim 5, wherein the intercalant is a quaternary ammonium derivative of an aliphatic, aromatic or arylaliphatic amine.

7. The process according to claim 5 or 6, wherein the intercalant is quaternary ammonium derivative of an aliphatic amine, the aliphatic amine being an alkyl amine containing at least one alkyl group with a number of carbon atoms of 8 or more.

8. The process according to any of the preceding claims, wherein the at least one initiator species is selected from the group consisting of peroxides and azo compounds.

9. The process according to any of the preceding claims, wherein the at least one ethylenically unsaturated monomer is represented by general formula (I) 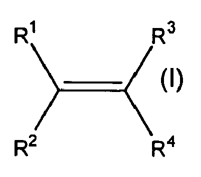 wherein R¹ and R² are independently selected from the group consisting of H, halogen, CF₃ straight or branched alkyl of 1 to 20 carbon atoms, aryl, α,β-unsaturated straight or branched alkenyl or alkynyl of 2 to 10 carbon atoms, α,β-unsaturated straight or branched alkenyl of 2 to 6 carbon atoms substituted with a halogen, C₃-C₈ cycloalkyl, heterocycloalkyl, YR⁵, C(=Y)R⁵, C(=Y)YR⁵, C(=Y)NR⁶R⁷ and YC(=Y)R⁶, where Y may be S, NR⁶ or O, R⁵ and R⁶ is alkyl of from 1 to 20 carbon atoms, alkoxy of from 1 to 20 carbon atoms, aryloxy or heterocycloxy, R⁶ and R⁷ are independently H or alkyl of from 1 to 20 carbon atoms, or R⁶ and R⁷ may be joined together to form an alkylene group of from 2 to 5 carbon atoms, thus forming a 3- to 6-membered ring, and R⁶ is H, straight or branched C₁-C₂₀ alkyl and aryl, R³ is selected from the group consisting of H, halogen, C₁-C₆ alkyl, COOR⁸, where R⁸ is H, an alkali metal, or a C₁-C₂₀ alkyl group in which each hydrogen atom may be replaced with halogen, or CₙH₂ₙYₘSiR^{x}₃, in which n is from 1 to 8, m is 1 or 0, Y may be S or O and R^{x} is selected from the group consisting of H, Cl, C₁-C₂-alkyl and alkoxy of from 1 to 4 carbon atoms or aryl; or R¹ and R³ may be joined to form a group of the formula (CH₂)ₙ , which may be substituted with from 1 to 2n' halogen atoms or C₁-C₄ alkyl groups or C(=O)-Y-C(=0), where n' is from 2 to 6 and Y is as defined above; or R⁴ is the same as R¹ or R² or optionally R⁴ is a CN group.

10. The process according to claim 9, wherein the ethylenically unsaturated monomer is selected from the group consisting of acrylic and methacrylic acid esters having from 1 to about 20 carbon atoms in the alcohol moiety; styrene; vinyl substituted styrene; ring substituted styrene.

11. The process according to claim 10, wherein the ethylenically unsaturated monomer is selected from the group consisting of n-butyl acrylate, ethyl acrylate, methyl methacrylate, isobornyl methacrylate, 2-ethylhexyl acrylate, t-butylacrylate, hydroxyethylmethylacrylate, acrylate and methacrylate esters of C₁-C₂₀ fluorinated alcohols, styrene, α-methyl styrene, p-methyl styrene, p-tert-butyl styrene, p-acetoxy styrene and ring-halogenated styrene.

12. The process according to any preceding claim, wherein the polymerization reaction is carried out at least until the organoclay is essentially completely exfoliated.

13. The process according to claim 12, wherein the polymerization reaction is stopped before the organoclay amount is lower than 10 % by weight based on the total weight of the nanocomposite.

14. The process according to claim 12 or 13, wherein the polymerization reaction is stopped before the organoclay amount is lower than 15 % by weight based on the total weight of the nanocomposite.

15. The process according to claim 12 to 14, wherein the polymerization reaction is stopped before the organoclay amount is lower than 20 % by weight based on the total weight of the nanocomposite.

16. The process according to claim 12 to 15, wherein the polymerization reaction is stopped before the organoclay amount is lower than 25 % by weight based on the total weight of the nanocomposite.

17. The process according to claim 12 to 16, wherein the polymerization reaction is stopped before the organoclay amount is lower than 30 % by weight based on the total weight of the nanocomposite.

18. A nanocomposite obtained by the process according to any of claims 1 to 17.

19. A nanocomposite comprising an amount of substantially completely exfoliated organoclay of at least 20 % by weight, preferably at least 25 % by weight and most preferably at least 30 % by weight, based on the total weight of the nanocomposite.

20. Use of a nanocomposite as claimed in claims 18 and 19 or obtained in a process as claimed in claims 1 to 17 in compounding and/or as masterbatch.
